# DEMANDE DE BREVET EUROPEEN

(11) **EP 1 983 066 A1**
(43) Date de publication de la demande: **22.10.2008**
(21) Numéro de dépôt: 07105311.0
(22) Date de dépôt: 30.03.2007
(51) Int. Cl.: C22B 7/00, C22B 23/02, C22B 34/34

(54) **Procédé de récupération du molybdène, du nickel, du cobalt ou de leurs mélanges à partir de catalyseurs usés ou régénérés**

(71) Demandeur: PAUL WURTH S.A., 1122 Luxembourg (LU)
(72) Inventeur: Roth, Jean-Luc, 57100 Thionville (FR); Piezanowski, Ludivine, 54190 Villerupt (FR)
(74) Mandataire: Kihn, Pierre Emile Joseph

(57) **Abrégé**

L'invention décrit un procédé de récupération du molybdène, du nickel, du cobalt ou de leurs mélanges à partir de catalyseurs usés ou régénérés dans un four électrique à arc contenant un pied de bain de fonte liquide, surmonté d'un laitier fluide comprenant les étapes suivantes :
a) ajout de catalyseurs usés ou régénérés à base d'alumine dans le pied de bain contenu dans le four électrique à arc,
b) ajout de chaux dosée de manière à obtenir un laitier de rapport CaO sur Al₂O₃ compris entre 0,7 et 1,3,
c) brassage du pied de bain par injection de gaz de manière à éviter la formation de croûtes,
d) fusion des catalyseurs usés ou régénérés dans le four électrique à arc pour obtenir un ferro-alliage liquide.

## Description

### Introduction :

La présente invention concerne un procédé de récupération à partir de catalyseurs usés ou régénérés.

Les catalyseurs usés ou régénérés sont généralement sous forme de granules à base d'alumine poreuse avec un dépôt métallique de molybdène, et parfois aussi de nickel, et/ou de cobalt.

Dans les catalyseurs usés, les métaux sont essentiellement sous forme de sulfures avec des teneurs en soufre et en carbone allant jusqu'à 20% en masse chacun.

Pour les catalyseurs régénérés ayant subi un traitement d'élimination du soufre et des carbonates par calcination, les métaux sont essentiellement sous forme d'oxyde. La teneur en soufre et en carbone est alors inférieure à 3%, parfois même inférieure à 1 %.

Ci-dessous une analyse typique des catalyseurs usés et régénérés:

| | **Catalyseur usagés** | **Catalyseur régénérés** |
|---|---|---|
| ***Eléments actifs*** | | |
| Mo | 5-15% | |
| Ni | 0-5% | |
| Co | 0-4% | |

| ***Support* / *Dépôt*** | | |
|---|---|---|
| C total | 0,5-20% | 0,5-3% |
| S | 0,5-12% | 0,5-3% |
| P | 0-2,5% | 0-2,5% |
| FeOₓ | 1,5-3% | 0-3% |
| Al₂O₃ | 20-85% | |
| SiO₂ | 0-20% | |

De façon conventionnelle, le molybdène et parfois aussi le nickel et/ou le cobalt de catalyseurs usés ou régénérés sont séparés et purifiés par une succession d'étapes hydro-métallurgiques. Les principaux désavantages de ces longs procédés sont :
• le coût du traitement qui devient très élevé si le résidu de départ est pauvre en nickel et/ou en molybdène
• les résidus obtenus dans ces procédés de retraitement par voie hydro génèrent des sous-produits de base alumine qui ne sont pas inertes notamment aux réactions de lixiviation. Ceci entraîne donc des coûts supplémentaires de retraitement ou de stockage particulier.

### Objet de l'invention :

L'objet de la présente invention est par conséquent de proposer un procédé alternatif de récupération du molybdène, du nickel, du cobalt ou de leurs mélanges à partir de catalyseurs usés ou régénérés.

Conformément à l'invention, cet objectif est atteint par un procédé de récupération du molybdène, du nickel, du cobalt ou de leurs mélanges à partir de catalyseurs usés ou régénérés dans un four électrique à arc comprenant plusieurs électrodes, équipé d'une sole et contenant un pied de bain de fonte liquide, surmonté d'un laitier liquide non moussant. Le procédé comprend les étapes suivantes :
a) transfert de catalyseurs usés ou régénérés à base d'alumine avec un dépôt d'un métal choisi parmi le molybdène, le nickel, le cobalt ou leurs mélanges dans le pied de bain contenu dans le four électrique à arc,
b) ajout de chaux dosée de manière à obtenir et à maintenir un laitier de rapport CaO sur Al₂O₃ compris entre 0,7 et 1,3,
c) brassage du pied de bain par injection de gaz de manière à éviter la formation de croûtes,
d) fusion des catalyseurs usés ou régénérés dans le four électrique à arc pour obtenir un ferro-alliage liquide.

Le procédé proposé met en oeuvre le four électrique à arc libre dans un procédé très particulier, consistant à charger les particules de catalyseurs usés ou régénérés à base d'alumine et à travailler sur un pied de bain de fonte surmonté d'une couche de laitier fluide.

Le brassage énergique du pied de bain permet d'homogénéiser en température le pied de bain et le laitier ; de renouveler en permanence la couche de laitier en contact avec le pied de bain afin qu'elle reste surchauffée et bien liquide, et capable d'absorber les catalyseurs usés ou régénérés à base d'alumine sans que ceux-ci ne se solidifient et forment alors une croûte infranchissable. En effet, au moment de l'impact des catalyseurs sur le laitier, ceux-ci sont directement digérés par le milieu du four et fondent très rapidement grâce au brassage énergique.

Ce brassage du pied de bain peut s'effectuer par injection de gaz neutre (azote, argon) à travers la sole du four électrique à arc à des débits de gaz de préférence compris entre 10 I/min.t. (litres par minute et par tonne de métal liquide du bain) et 150 I/min.t. De manière particulièrement préférée, le débit de gaz de brassage se situe entre 15 et 50 I/min.t. Bien entendu, ces débits sont à ajuster en fonction de la hauteur du pied de bain ainsi que du nombre et de la position de points d'injection. Ces débits élevés de gaz de brassage sont sans rapport avec la pratique courante au four électrique à arc. En effet, le débit de gaz de brassage dans les procédés classiques de production d'acier dans un four électrique à arc se situe dans la gamme de 0,1 à 5 I/min.t et est destiné uniquement à homogénéiser le pied de bain et à régulariser les résultats métallurgiques et la température.

Pour garantir l'efficacité optimale du brassage, le pied de bain métallique doit avoir une certaine hauteur minimale, de préférence une hauteur d'au moins 0,3 m. Il faut veiller à éviter que l'injection du gaz de brassage par la sole du four ne fasse simplement un "trou" au travers du bain de métal, sans le mettre en mouvement énergiquement. Bien entendu, cette hauteur minimale peut varier en fonction de la configuration du four à arc électrique et de l'emplacement des moyens d'injection de gaz qui sont de préférence des briques poreuses ou bien des tuyères.

Le transfert du catalyseur et de la chaux dans le four électrique se font, de préférence, entre les électrodes. Alternativement, le chargement du catalyseur et de la chaux se font depuis un orifice dans la voûte du four à arc. Cet orifice muni d'une rigole, est alors situé sur le périmètre du cercle des électrodes, avec une inclinaison de la rigole telle que la matière, lors de sa chute, pénètre entre les électrodes dans le pied de bain.

Le transfert du catalyseur et de la chaux dans le four électrique se font de préférence de manière simultanée ou alternée.

Au début de l'opération, il n'y a pas ou très peu de laitier sur le pied de bain, un laitier fluide est formé au fur et à mesure de l'introduction du catalyseur et de la chaux.

Le laitier formé au cours du procédé se compose essentiellement d'un mélange alumine, éventuellement de silice et de chaux. Le rapport CaO/Al₂O₃ est continuellement ajusté afin de maintenir un rapport compris entre 0,7 et 1,3, de manière préférée entre 0,8 et 1,2, de manière particulièrement préférée entre 0,9 et 1,1 et en particulier proche de 1. Le principal avantage de ce laitier est d'être fluide. En effet, la fluidité du laitier peut être comparée à celle d'une huile minérale. De préférence, le laitier est non moussant.

Selon un autre mode de réalisation préféré, on ajoute en outre des agents de formation de laitier supplémentaires pendant l'étape a) ou l'étape b). Ces agents de formation de laitier sont choisis de préférence parmi le groupe constitué de castine et de magnésie ainsi que de leurs mélanges.

Un autre avantage de ce laitier est qu'il constitue un bon désulfurant aux températures supérieures à 1500 °C. De ce fait, il permet d'atteindre des teneurs en soufre inférieures ou égales à 0,1 % dans le ferro-alliage final et ce même si les catalyseurs sont fortement contaminés par des sulfures (jusqu'à environ 12 % S). Comme la quantité de laitier formé est importante aux vues de la composition de la matière première et de la quantité de chaux introduite afin de maintenir le rapport Al₂O₃/CaO dans la fourchette souhaitée, la fonte doit être décrassée en évacuant le laitier (en totalité ou en partie) hors du four électrique à des intervalles réguliers. Ceci a comme avantage de renouveler le laitier à des intervalles réguliers et d'extraire plus facilement le soufre apporté par l'ajout de catalyseurs à forte teneur en soufre.

Un avantage supplémentaire du présent procédé réside dans le fait qu'il permet même de récupérer des catalyseurs qui ont une teneur relativement élevée en phosphore (jusqu'à 2,5 % en P). Le phosphore est, tout comme le soufre, considéré comme étant un polluant parmi les produits susceptibles de réutiliser le ferro-alliage résultant en tant que matière première. Des teneurs élevées en phosphore sont particulièrement gênantes dans la fabrication d'aciers au chrome. En effet, un débouché intéressant pour l'alliage obtenu par le présent procédé est la production d'acier inox à condition d'avoir une faible teneur en phosphore et en soufre.

En effet, après fusion de la matière première et l'obtention d'une fonte comprenant p.ex. jusqu'à 25 % de molybdène et au maximum 0,1 % de soufre, la teneur en phosphore peut être diminuée. Cette déphosphoration est réalisée par l'ajout d'éléments oxydant dans le métal liquide, par exemple par injection d'oxygène dans le métal liquide ou bien par un ajout d'oxydes de fer, de préférence sous forme de minerai. La teneur en phosphore dans le métal liquide après cette déphosphoration est très inférieure à 0,1 %.

Le ferro-alliage ainsi obtenu comprend de 10 à 25 % de molybdène, entre 0 et 10% de Ni, entre 0 et 8% de Co ainsi que des teneurs en phosphore et en soufre très faibles. De plus, les teneurs en phosphore et en soufre sont facilement adaptables aux contraintes imposées par les usages potentiels du ferro-alliage.

Le ferro-alliage obtenu est ensuite coulé.

Ce ferro-alliage à faible teneur en soufre et en phosphore ouvre donc des nouveaux débouchés pour les catalyseurs devenus inutilisables.

Ce procédé de récupération de catalyseurs usés ou régénérés permet de fabriquer un ferro-alliage contenant du fer, du molybdène avec éventuellement du nickel ou bien du cobalt à basse teneur en soufre et en phosphore en deux étapes seulement et dans un seul réacteur (four électrique). Par ailleurs, ce procédé de récupération permet de recourir à une combinaison d'équipements standards (four électrique, dispositif de chargement, dispositif de brassage du bain) qui sont utilisés dans des conditions de fonctionnement spécifiques.

D'autres particularités et caractéristiques de l'invention ressortiront de la description détaillée d'un mode de réalisation avantageux présenté ci-dessous, à titre d'illustration.

### Exemple 1 :

La fabrication d'un alliage fer-molybdène-nickel ou de l'alliage fer-molybdène-cobalt à basse teneur en soufre et phosphore est réalisée dans un four électrique à arc libre comprenant plusieurs électrodes. La fabrication de l'alliage fer-molybdène-nickel ou fer-molybdène-cobalt est décrite de la même façon (due à un comportement similaire du nickel et du cobalt).

L'opération démarre sur un pied de bain de fonte (fer carburé) à 1550 °C. Elle consiste dans une première phase à charger de façon continue le catalyseur avec ajout simultané ou alterné de chaux dosée de manière à obtenir un laitier de rapport CaO sur Al₂O₃ de l'ordre de 1.

Les catalyseurs traités dans l'exemple 1 sont des catalyseurs pétrochimiques régénérés à base d'alumine poreux avec dépôt de molybdène et de nickel.

Le tableau ci-dessous indique la composition chimique du catalyseur utilisé:

| | **Composition** |
|---|---|
| Fe | 2,4% |
| Mo | 10,2% |
| Co | 0,2% |
| Ni | 2,8% |
| Al2O3 | 43,6% |
| SiO2 | 8,1% |
| S | 1,2% |
| P | 1,1% |

Les essais de fusion ont lieu dans un four électrique à arc libre de 3 MVA. La capacité nominale du four est de 6 tonnes. Le débit de produit (catalyseur + chaux) à l'entrée du four est d'environ 2 t/h.

Le pied de bain est formé à partir de 4 t de fonte fusionnée. La température du bain est maintenue entre 1550 et 1650 °C. Le débit moyen de produit à l'entrée du four (catalyseur + chaux) est de l'ordre de 2 t/h avec des pointes à 3 t/h. Le bain est brassé par de l'azote gazeux à un débit de 15 à 20 I/min.t.

La quantité de laitier initial est négligeable. Le laitier se forme au fur et à mesure que le produit pénètre dans le bain. La fusion du catalyseur est très rapide et celui-ci est rapidement digéré par le système. Une quantité négligeable de produit non fondu au-dessus du laitier a pu être observée durant l'essai quand le débit de chargement était trop élevé. On effectue ponctuellement des injections de carbone dans le bain de fonte afin de maintenir dans le bain une teneur en carbone de l'ordre de 2 à 4 %.

La phase de désulfuration a lieu simultanément à la fusion dans le four électrique. En effet, la composition même du laitier (alumine-chaux) lui confère un pouvoir désulfurant et de ce fait permet de réduire la teneur en soufre au moins jusqu'à 0,1 %.

La phase de déphosphoration a lieu à la fin de la phase de fusion continue du catalyseur lorsque la teneur visée en molybdène est atteinte, et que la teneur en soufre est acceptable. Si le soufre est trop élevé, on effectue une phase de désulfuration supplémentaire par un laitier CaO-Al₂O₃, suivie d'un décrassage (laitier chargé en soufre). L'abattement du phosphore se fait par injection d'oxygène dans le bain et par addition de chaux.

Le tableau ci-dessous, indique la composition du ferro-alliage et du laitier après introduction d'environ 5,3 tonnes de catalyseur sur 4 t de fonte liquide :

| | **Pied de bain (fonte)** | **Ferro-alliage** | **Laitier** | **Poussières** |
|---|---|---|---|---|
| **Masse** | **4,0t** | **4,6t** | **6,6 t** | **45 kg** |
| Fe | 96% | 80,9% | 4,1% | 39,5% |
| C | 3,2% | 3,7% | 0,00% | 0,0% |
| Mo | < 0,005% | 11,2% | 0,60% | 1,4% |
| Ni | 0,02 | 3,1% | < 0,05 % | 0,3% |
| Al2O3 | 0% | 0,0% | 35,3% | 0,5% |
| SiO2 | 0% | 0,0% | 7,2% | 4,2% |
| S | 0,01% | 0,1% | 0,9% | 2,9% |
| P | 0,08% | 0,01% | 0,4% | 0,2% |
| CaO | 0% | 0,0% | 49,5% | 4,4% |

Le but de cet essai est de montrer que la présente invention permet de faire un alliage commercialisable dans un temps relativement court, avec une teneur en molybdène de 10 à 25 % et des teneurs en soufre et phosphore inférieures à 0,1 %. L'essai montre que l'objectif de fabriquer un ferro-alliage fer-molybdène-nickel à basses teneurs en soufre et phosphore dans un four électrique à arc libre à partir de catalyseur (alumine-molybdène-nickel) est atteint. De plus, cet essai montre qu'un rendement molybdène et nickel de l'ordre de 95% peut être atteint.

## Revendications

1. Procédé de récupération du molybdène, du nickel, du cobalt ou de leurs mélanges à partir de catalyseurs usés ou régénérés dans un four électrique à arc comprenant plusieurs électrodes, équipé d'une sole et contenant un pied de bain de fonte liquide, surmonté d'un laitier fluide comprenant les étapes suivantes :
a) ajout de catalyseurs usés ou régénérés à base d'alumine avec un dépôt d'un métal choisi parmi le groupe constitué du molybdène, du nickel et du cobalt ainsi que de leurs mélanges dans le pied de bain contenu dans le four électrique à arc,
b) ajout de chaux dosée de manière à obtenir un laitier de rapport CaO sur Al₂O₃ compris entre 0,7 et 1,3,
c) brassage du pied de bain par injection de gaz de manière à éviter la formation de croûtes,
d) fusion des catalyseurs usés ou régénérés dans le four électrique à arc pour obtenir un ferro-alliage liquide.

2. Procédé selon la revendication 1, **caractérisé en ce que** l'ajout de catalyseurs usés ou régénérés et/ou de chaux est effectué par gravité.

3. Procédé selon la revendication 1 ou 2, **caractérisé en ce que** l'ajout de catalyseurs usés ou régénérés et/ou de chaux est réalisé dans une région située entre les électrodes du four électrique à arc.

4. Procédé selon l'une quelconque des revendications précédentes, **caractérisé en ce que** pendant l'étape a) ou l'étape b), on ajoute des agents de formation de laitier choisis parmi le groupe constitué de castine et de magnésie ainsi que de leurs mélanges.

5. Procédé selon l'une quelconque des revendications précédentes, **caractérisé en ce que** le brassage du pied de bain est réalisé par injection de gaz neutre à travers la sole du four électrique à arc à un débit compris entre 10 I/min.t et 150 I/min.t et de manière préférée à un débit entre 10 et 50 I/min.t.

6. Procédé selon l'une quelconque des revendications précédentes, **caractérisé par** les étapes supplémentaires suivantes :
e) décrassage de l'alliage obtenu par enlèvement du laitier,
f) ajout d'éléments oxydant, afin de diminuer le taux de phosphore jusqu'en dessous de 0,1 %.
g) coulée du ferro-alliage ainsi obtenu.

7. Procédé selon la revendication 6, **caractérisé en ce que** l'ajout d'éléments oxydant pendant l'étape f) est réalisé par injection d'un gaz contenant de l'oxygène et/ou par un ajout d'oxydes de fer.

8. Procédé selon la revendication 6 ou 7, **caractérisé en ce que** le laitier est enlevé, entièrement ou en partie, à plusieurs reprises avant la coulée de l'alliage.

9. Procédé selon l'une quelconque des revendications précédentes, **caractérisé en ce que** l'on ajuste la teneur en C du pied de bain à des valeurs comprises entre 2 et 4 % (w/w).
